# EUROPÄISCHE PATENTSCHRIFT

(11) **EP 2 811 566 B1**
(45) Veröffentlichungstag und Bekanntmachung des Hinweises auf die Patenterteilung: **21.06.2017**
(21) Anmeldenummer: 14164236.3
(22) Anmeldetag: 10.04.2014
(51) Int. Cl.: H01M 8/026, H01M 8/0254, H01M 8/1018

(54) **BIPOLARPLATTE UND BRENNSTOFFZELLE MIT EINER SOLCHEN**
BIPOLAR PLATE AND FUEL CELL WITH THE SAME
PLAQUE BIPOLAIRE ET PILE À COMBUSTIBLE DOTÉE DE CELLE-CI

(30) Priorität: 06.06.2013 DE 102013210544
(43) Veröffentlichungstag der Anmeldung: 10.12.2014
(73) Patentinhaber: Volkswagen AG, 38440 Wolfsburg (DE)
(72) Erfinder: Andreas-Schott, Benno, 38524 Sassenburg / OT Triangel (DE)
(74) Vertreter: Gulde & Partner

(56) Entgegenhaltungen:
- DE-A1-102011 009 805
- JP-A- 2000 251 907
- US-A1- 2003 186 106
- US-A1- 2004 209 150

## Beschreibung

Die Erfindung betrifft eine Bipolarplatte für eine Brennstoffzelle, wobei die Bipolarplatte zwei Hauptseiten aufweist und auf beiden Hauptseiten jeweils längliche Erhöhungen und dazwischen verlaufende Kanäle ausbildet. Wenigstens eine der Erhöhungen weist wenigstens eine Abflachung auf. Zudem betrifft die Erfindung eine Brennstoffzelle, welche wenigstens eine erfindungsgemäße Bipolarplatte umfasst.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die so genannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den, der Membran abgewandten Seiten der Elektroden angeordnet sein. In der Regel wird die Brennstoffzelle durch eine Vielzahl, im Stapel (englisch: stack) angeordneter MEAs gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion von O₂ zu O²⁻ unter Aufnahme der Elektronen stattfindet. Gleichzeitig reagieren im Kathodenraum diese Sauerstoffanionen mit den, über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Die derzeit am weitesten entwickelte Brennstoffzellentechnologie basiert auf Polymerelektrolytmembranen (PEM), bei denen die Membran selbst aus einem Polymerelektrolyt besteht. Hierbei werden oft säuremodifizierte Polymere, insbesondere perfluorierte Polymere, eingesetzt. Der am weitesten verbreitete Vertreter dieser Klasse von Polymerelektrolyten ist eine Membran aus einem sulfonierten Polytetrafluorethylen-Copolymer (Handelsname: Nafion; Copolymer aus Tetrafluorethylen und einem Sulfonylsäurefluorid-Derivat eines Perfluoralkylvinylethers). Die elektrolytische Leitung findet dabei über hydratisierte Protonen statt, weshalb für die Protonenleitfähigkeit das Vorhandensein von Wasser Bedingung ist und im Betrieb der PEM-Brennstoffzelle ein Anfeuchten der Betriebsgase erforderlich ist. Aufgrund der Notwendigkeit des Wassers ist die maximale Betriebstemperatur dieser Brennstoffzellen bei Normdruck auf unter 100 °C beschränkt. In Abgrenzung von Hochtemperatur-Polymerelektrolytmembran-Brennstoffzellen (HT-PEM-Brennstoffzellen), deren elektrolytische Leitfähigkeit auf einen durch elektrostatische Komplexbindung an ein Polymergerüst der Polymerelektrolytmembran gebundenen Elektrolyten beruht (beispielsweise Phosphorsäure-dotierte Polybenzimidazol(PBI)-Membrane) und die bei Temperaturen von 160 °C betrieben werden, wird dieser Brennstoffzellentyp auch als Niedertemperatur-Polymerelektrolytmembran-Brennstoffzelle (NT-PEM-Brennstoffzelle) bezeichnet.

Wie einleitend erwähnt, wird die Brennstoffzelle durch eine Vielzahl, im Stapel angeordneter Einzelzellen gebildet, sodass von einem Brennstoffzellenstapel gesprochen wird. Zwischen den Membran-Elektroden-Einheiten sind in der Regel so genannte Bipolarplatten angeordnet, welche eine Versorgung der Einzelzellen mit den Betriebsmitteln, also den Reaktanten und üblicherweise auch einer Kühlflüssigkeit sicherstellen. Zudem sorgen die Bipolarplatten für einen elektrisch leitfähigen Kontakt zu den Membran-Elektroden-Einheiten.

Die DE 10 2010 015 504 A1, JP 2005190774 A, US 7,537,854 B2 offenbaren allgemein derartige Anordnungen von Membran-Elektroden-Einheiten zwischen Bipolarplatten.

Ferner wird auf die US 2004/0209150 A1 und die JP 2000 251907 A verwiesen.

Die Bipolarplatten können auf ihren beiden Hauptseiten längliche Erhöhungen mit dazwischen liegenden Kanälen aufweisen. Die Erhöhungen und Kanäle erstrecken sich auf beiden Hauptseiten jeweils zwischen zwei (die Bipolarplatte durchdringenden) Betriebsmittelkanälen, welche mit der jeweiligen Hauptseite und deren Kanälen verbunden sind. Während des Betriebs der Brennstoffzelle strömt über einen Betriebsmittelkanal einer der Reaktanten in die Kanäle. Der Reaktant passiert zunächst einen Verteilbereich, welcher den Reaktanten gleichmäßig auf die Kanäle eines sogenannten (chemisch) aktiven Bereichs verteilt. Der aktive Bereich ist dabei jener Bereich, in welchem die oben beschriebenen chemischen Reaktionen an der Membran-Elektroden-Einheit ablaufen. Typischerweise tritt ein Teil des Reaktanten über die Kanäle des aktiven Bereichs wieder aus diesem aus und wird mittels der Kanäle eines weiteren Verteilbereichs in die zweite Betriebsmittelöffnung geleitet.

Bei aktuellen Konstruktionen des Brennstoffzellenstapels kann es vorkommen, dass die Gasdiffusionslage nur in dem aktiven Bereich vorgesehen ist. Somit ist zwischen einem Anodenverteilbereich und einem Kathodenverteilbereich der beiden angrenzenden Bipolarplatten nur eine Randverstärkung (typischerweise eine Folie) der Membran-Elektroden-Einheit vorhanden. Dadurch können größere und somit weniger verlustbehaftete durchströmte Querschnitte in den Kanälen der Verteilbereiche realisiert werden. Um eine Gleichverteilung der Reaktanten auf den aktiven Bereich zu gewährleisten, ist der Abstand der Erhöhungen zur Randverstärkung so gering wie möglich zu gestalten, damit es nicht zu einem Überströmen zwischen der Randverstärkung und den länglichen Erhöhungen von einem Kanal zum nächsten kommt. Ist der Abstand jedoch zu gering, besteht die Gefahr eines Kurzschlusses in Kreuzungspunkten (Schnittpunkten) der Erhöhungen der Kathoden- und Anodenverteilbereiche, durch eine Ausdünnung und ein Kriechen der Randverstärkung in Folge einer hohen Flächenpressung. Das genaue Einstellen dieses Spaltes zwischen den Verteilbereichen ist aufgrund von Toleranzen der Gasdiffusionslage und Fertigungstoleranzen äußerst schwierig. Eine Vermessung der Dicken der Gasdiffusionslagen, mit einer anschließenden Selektion der Gasdiffusionslagen (also eine Verwendung von ausgewähltem Material) verursacht Ausschuss und ist somit eine kostenintensive Lösung.

Der Erfindung liegt nun die Aufgabe zugrunde, eine Bipolarplatte und eine Brennstoffzelle zur Verfügung zu stellen, welche sich durch eine erhöhte innere Kurzschlusssicherheit auszeichnen und gleichzeitig kostengünstiger herstellbar sind.

Diese Aufgabe wird durch die erfindungsgemäße Bipolarplatte für eine Brennstoffzelle gelöst, wobei die Bipolarplatte zwei Hauptseiten aufweist und auf beiden Hauptseiten jeweils längliche Erhöhungen und dazwischen verlaufende Kanäle ausbildet. Es ist vorgesehen, dass wenigstens eine der Erhöhungen wenigstens eine Abflachung aufweist. Kennzeichnend ist vorgesehen, dass die wenigstens eine Abflachung eine lokale Absenkung der Erhöhung ist und die wenigstens eine Abflachung in einem Verteilbereich der Bipolarplatte vorgesehen ist, wobei die Kanäle des Verteilbereichs zu einem aktiven Bereich der Bipolarplatte hin oder von diesem weg führen.

Durch die wenigstens eine Abflachung, also eine lokale Absenkung der Erhöhung kann es nicht mehr zu einer Ausdünnung oder einem Kriechen einer Randverstärkung einer Membran-Elektroden-Einheit einer Brennstoffzelle in Folge einer übermäßigen Belastung kommen. Somit wird die Kurzschlusssicherheit erhöht.

Als "Hauptseiten" der Bipolarplatte werden jene beiden gegenüberliegenden Seiten der Bipolarplatte bezeichnet, deren Flächeninhalte verglichen mit den Flächeninhalten der Kanten (den Schmalseiten) der Bipolarplatte wesentlich größer sind.

Gemäß einer bevorzugten Ausgestaltung der Erfindung ist vorgesehen, dass auf die Ebene der Bipolarplatte normal-projizierte Verläufe der Erhöhungen beider Hauptseiten wenigstens einen Kreuzungspunkt aufweisen, und die wenigstens eine Abflachung an dem wenigstens einen Kreuzungspunkt angeordnet ist. Die Ebene der Bipolarplatte verläuft in Richtung der Flachseite der Bipolarplatte (also parallel zur Flachseite). Innerhalb einer Brennstoffzelle sind typischerweise mehrere Bipolarplatten und Membran-Elektroden-Einheiten abwechselnd übereinander gestapelt. Projiziert man die Verläufe der an die Membran-Elektroden-Einheit angrenzen Erhöhungen der Bipolarplatten auf die Ebene der Membran-Elektroden-Einheit, so ergeben sich auch hier Kreuzungspunkte, welche in Stapelrichtung gesehen mit den Kreuzungspunkten in den Ebenen der Bipolarplatten deckungsgleich sind. Somit wird durch diese Ausgestaltung innerhalb einer Brennstoffzelle eine übermäßige Pressung der Membran-Elektroden-Einheit und insbesondere einer Randverstärkung der Membran-Elektroden-Einheit an den Kreuzungspunkten verhindert. Somit kann es nicht mehr zu Kurzschlüssen in Folge einer übermäßigen Belastung durch eine Überschneidung an den Kreuzungspunkten kommen.

Bevorzugt weisen die Erhöhungen beider Hauptseiten an dem wenigstens einen Kreuzungspunkt je eine Abflachung auf. Somit sind die Abflachungen an dem wenigstens einen Kreuzungspunkt beidseitig der Bipolarplatte vorgesehen. Dadurch sind innerhalb der Brennstoffzelle die Abflachungen beidseitig der Membran-Elektroden-Einheit vorgesehen.

Es ist vorgesehen, dass die wenigstens eine Abflachung in einem Verteilbereich der Bipolarplatte vorgesehen ist, wobei die Kanäle des Verteilbereichs zu einem chemisch aktiven Bereich der Bipolarplatte hin oder von diesem weg führen. Im Verteilbereich kann es vorkommen, dass nur die Randverstärkung der Membran-Elektroden-Einheit zwischen den Bipolarplatten angeordnet ist. Somit ist die wenigstens eine Abflachung im Verteilbereich von besonderem Vorteil.

Bevorzugt ist vorgesehen, dass eine Absenkung der wenigsten einen Abflachung höchstens 0,2 mm, bevorzugt höchstens 0,1 mm, insbesondere höchstens 0,07 mm beträgt. Durch diese Ausgestaltung ist sichergestellt, dass innerhalb einer Brennstoffzelle einerseits eine übermäßige Pressung der Membran-Elektroden-Einheit zwischen den Erhöhungen ausgeschlossen ist, aber gleichzeitig ein Überströmen zwischen den einzelnen Kanälen verhindert wird. Die Absenkung wird zwischen der tiefsten Stelle der Absenkung und der höchsten Stelle der Erhöhung beidseitig der Abflachung gemessen.

Gemäß einer bevorzugten Ausgestaltung der Erfindung ist vorgesehen, dass die wenigstens eine Abflachung eine Breite aufweist, welche größer als eine Breite der Erhöhung auf einem Höhenniveau der Abflachung ist. Dadurch wird eine größere Auflagefläche an der Abflachung bereitgestellt, wodurch die Flächenpressung der Membran-Elektroden-Einheit weiter gesenkt wird. Die Breite der Erhöhung wird beidseitig der Abflachung gemessen. Das Messen erfolgt auf dem Höhenniveau der Abflachung, also auf selber Höhe wie der Höhe der Abflachung. Die Breite erstreckt sich jeweils rechtwinkelig zur Längserstreckung der Erhöhung und parallel zu der Ebene der Bipolarplatte.

Ferner wird eine Brennstoffzelle zur Verfügung gestellt. Die Brennstoffzelle umfasst wenigstens eine erfindungsgemäße Bipolarplatte. Die erfindungsgemäße Brennstoffzelle zeichnet sich, wie bereits obenstehend beschrieben wurde, durch eine erhöhte Kurzschlusssicherheit aus. Durch die Abflachungen wird ein Ausdünnen von Membran-Elektroden-Einheiten der Brennstoffzelle zwischen den Bipolarplatten verhindert.

Vorzugsweise ist vorgesehen, dass die Brennstoffzelle wenigstens eine Membran-Elektroden-Einheit umfasst, welche zwischen zwei der (erfindungsgemäßen) Bipolarplatten angeordnet ist, wobei die Abflachung eine Form aufweist, welche einer Kontur der im Kreuzungspunkt über die gegenüberliegende Erhöhung gespannten Membran-Elektroden-Einheit entspricht. Die Abflachung weist also eine Form auf, durch welche es ermöglich wird, dass die Abflachung die Spitze der gegenüberliegenden Erhöhung mitsamt dazwischen liegender Membran-Elektroden-Einheit im Wesentlichen dichtend aufnimmt. Dadurch wird ein Überströmen zwischen den Kanälen, also zwischen der Abflachung und der Membran-Elektroden-Einheit, verhindert.

Ferner wird ein Kraftfahrzeug umfassend eine erfindungsgemäße Brennstoffzelle zur Verfügung gestellt. Die Brennstoffzelle ist insbesondere mit einer elektrischen Antriebseinheit des Kraftfahrzeugs leitfähig verbunden. Das Kraftfahrzeug zeichnet sich durch eine erhöhte Zuverlässigkeit aus.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine erfindungsgemäße Brennstoffzelle gemäß einer bevorzugten Ausgestaltung der Erfindung,
- Figur 2: eine rechtwinkelige Draufsicht auf eine Hauptseite einer erfindungsgemäßen Bipolarplatte gemäß einer bevorzugten Ausgestaltung der Erfindung,
- Figur 3: eine dreidimensionale Darstellung eines Teilbereichs S eines Verteilbereichs der Bipolarplatte,
- Figur 4: eine Draufsicht eines Teilbereichs H des Verteilbereichs,
- Figur 5: eine Schnittdarstellung C-C des Teilbereichs H und
- Figur 6: eine dreidimensionale Schnittdarstellung von Abflachungen in einem Kreuzungspunkt.

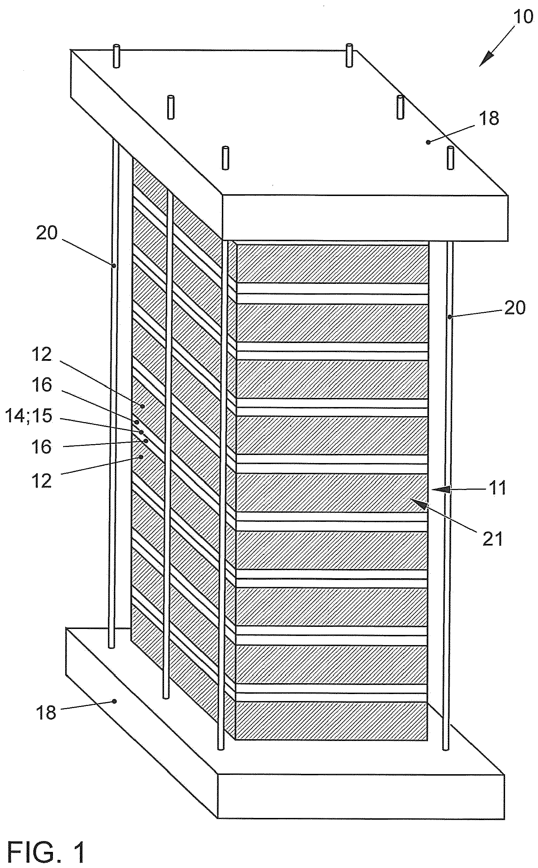

Figur 1 zeigt in einer schematischen Darstellung eine erfindungsgemäße Brennstoffzelle 10 gemäß einer bevorzugten Ausgestaltung der Erfindung. Die Brennstoffzelle 10 umfasst mehrere Bipolarplatten 12. Die Bipolarplatten 12 sind abwechselnd mit Membran-Elektroden-Einheiten 14 der Brennstoffzelle 10 gestapelt. Die Membran-Elektroden-Einheiten 14 umfassen eine (nicht dargestellte) Membran. Zudem können die Membran-Elektroden-Einheiten 14 an ihren, in Figur 1 sichtbaren Rändern eine Randverstärkung 15 (typischerweise eine Folie) umfassen, welche die Membran umlaufend umschließt. An der Membran anliegend können die Membran-Elektroden-Einheiten 14 zudem (nicht dargestellte) Gasdiffusionslagen aufweisen.

Zwischen den Membran-Elektroden-Einheiten 14 und den Bipolarplatten 12 sind Dichtungen 16 angeordnet, welche Bereiche zwischen den Bipolarplatten 12 und den Membran-Elektroden-Einheit 14 umlaufend begrenzen und dichten. Die gestapelte Anordnung der Bipolarplatten 12 und der Membran-Elektroden-Einheit 14 kann auch als Brennstoffzellenstapel 11 bezeichnet werden. Ferner kann die Brennstoffzelle 10 Endplatten 18 aufweisen, zwischen welchen der Brennstoffzellenstapel 11 mittels Zugelementen 20, z. B. Zugstangen, verpresst werden kann.

In Figur 1 sind von den Bipolarplatten 12 und den Membran-Elektroden-Einheiten 14 lediglich die Schmalseiten 21 sichtbar. Die Hauptseiten der Bipolarplatten 12 und der Membran-Elektroden-Einheiten 14 liegen aneinander an.

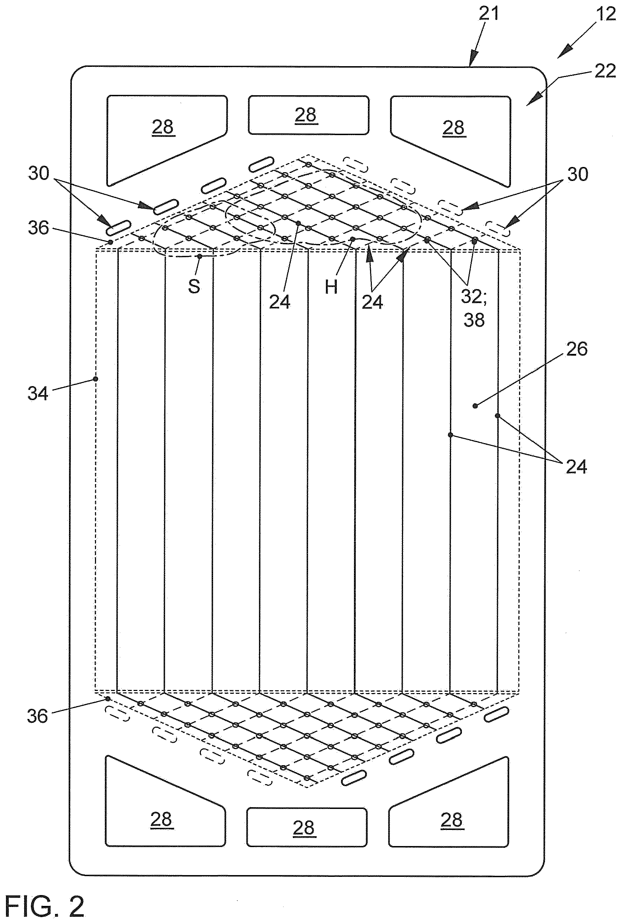

Figur 2 zeigt in einer schematischen Darstellung eine rechtwinkelige Draufsicht auf eine Hauptseite 22 einer erfindungsgemäßen Bipolarplatte 12 gemäß einer bevorzugten Ausgestaltung der Erfindung. Die Bipolarplatte 12 weist sowohl auf ihrer dargestellten Hauptseite 22, als auch auf der (nicht dargestellten) gegenüber liegenden Hauptseite 22 längliche Erhöhungen 24 (Stege) und dazwischen verlaufende Kanäle 26 auf. Die länglichen Erhöhungen 24 sind schematisch durch deren Verläufe dargestellt.

Die Bipolarplatte 12 kann Betriebsmittelöffnungen 28 aufweisen, welche die Bipolarplatte 12 durchdringen. Zwei der Betriebsmittelöffnungen 28 sind über das Innere der Bipolarplatte 12 und über Austrittsöffnungen 30 mit den sichtbaren Kanälen 26 verbunden. Weitere zwei der Betriebsmittelöffnungen 28 sind auf der gegenüber liegenden Hauptseite 22 ebenfalls über das Innere der Bipolarplatte 12 und Austrittsöffnungen 30 (gestrichelt dargestellt) mit den nicht sichtbaren Kanälen auf der gegenüber liegenden Hauptseite 22 verbunden. Die nicht sichtbaren Kanäle verlaufen auf der gegenüberliegenden Hauptseite zwischen länglichen Erhöhungen 24 (gestrichelt dargestellt).

Die rechtwinkelige Draufsicht auf die Hauptseite 22 entspricht einer rechtwinkeligen Sicht auf die Ebene der Bipolarplatte 12. Somit entsprechen die dargestellten Verläufe der Erhöhungen 24 einer Normalprojektion der Verläufe der Erhöhungen 24 beider Hauptseiten 22 auf die Ebene der Bipolarplatte 12. Diese Verläufe der Erhöhungen 24 beider Hauptseiten 22 weisen Kreuzungspunkte 32 auf.

Die Kanäle 26 und Erhöhungen 24 verlaufen innerhalb eines (chemisch) aktiven Bereichs 34 und beidseitig des aktiven Bereichs 34 in Verteilbereichen 36, wobei die Verteilbereiche zwischen den Betriebsmittelöffnungen 28 und dem aktiven Bereich 34 angeordnet sind. Die Kanäle 26 und Erhöhungen 24 in den Verteilbereichen 36 werden oft auch als Verteilstrukturen bezeichnet. Eine gebräuchliche Art von Membran-Elektroden-Einheiten 14 weist eine Membran und Gasdiffusionslagen beidseitig der Membran im aktiven Bereich 34 auf. Außerhalb des aktiven Bereichs 34 und somit in den Verteilbereichen 36 weisen die Membran-Elektroden-Einheiten 14 in großen Bereichen zumeist lediglich jeweils eine Randverstärkung 15 auf, welche durch eine Kunststofffolie realisiert sein kann. An den Kreuzungspunkte 32 ergaben sich bisher oftmals kritische Bereiche bezüglich einer zu hohen Flächenpressung der Randverstärkung 15 zwischen den Erhöhungen 24. Um dem abzuhelfen weisen die Erhöhungen erfindungsgemäße Abflachungen 38 auf, welche sich an den Kreuzungspunkten 32 befinden.

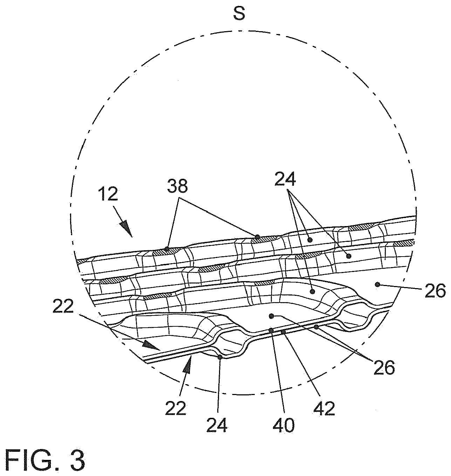

Figur 3 zeigt zur Veranschaulichung eine dreidimensionale Darstellung eines Teilbereichs S eines der Verteilbereiche 36. Der dargestellte Teilbereich S dient der Veranschaulichung und entspricht nicht vollständig dem in der schematischen Darstellung der Figur 1 eingezeichneten Teilbereich S. Der Blick ist in Figur 3 ausgehend von dem aktiven Bereich 34 in den Verteilbereich 36 gereichtet, wobei der aktive Bereich 34 in Figur 3 nicht dargestellt ist, um den Aufbau der Bipolarplatte 12 erkennen zu können. Demnach umfasst die Bipolarplatte 12 zwei Platten, welche als Anodenplatte 40 und als Kathodenplatte 42 bezeichnet werden können und derart geprägt sind, dass sie jeweils die Erhöhungen 24 und Kanäle 26 einer der Hauptseiten 22 ausbilden. Zudem ist auch ersichtlich, dass die Abflachungen 38 eine Breite aufweisen können, welche größer als eine Breite der Erhöhung 24 auf einem Höhenniveau der Abflachung 38 ist. Somit ergibt sich eine größere Auflagefläche für die Membran-Elektroden-Einheit 14.

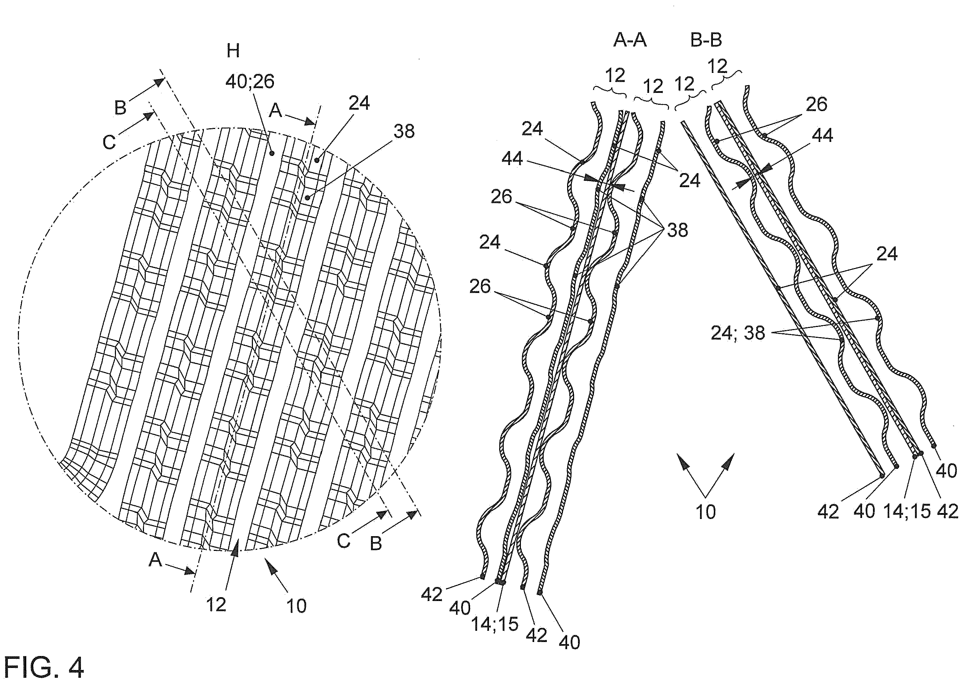

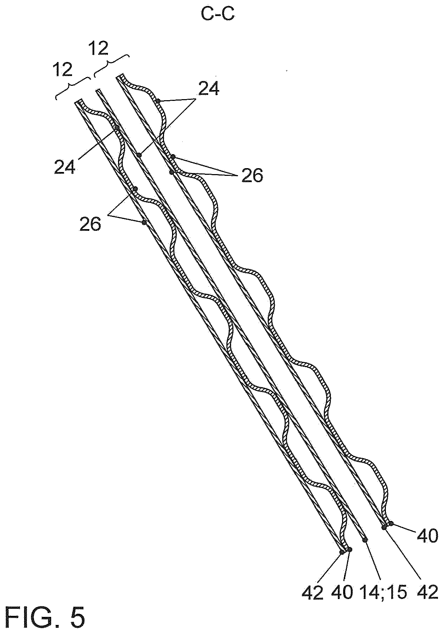

Figur 4 zeigt zur Veranschaulichung eine Draufsicht eines Teilbereichs H des Verteilbereichs 36. Der dargestellte Teilbereich S dient ebenfalls der Veranschaulichung und entspricht nicht vollständig dem in der schematischen Darstellung der Figur 1 eingezeichneten Teilbereich H. Die Schnittdarstellungen A-A, B-B und C-C (Figur 5) zeigen Erhöhungen 24, so dass jeweils die Erhöhungen 24 einer der Hauptseiten 22 quer über die Zeichenebene verlaufen und die Erhöhungen 24 der anderen Hauptseite 22 in die Zeichenebene hinein verlaufen.

In der Schnittdarstellung A-A verlaufen die im Teilbereich H sichtbaren Erhöhungen 24 der Anodenplatte 40 quer über die Zeichenebene. Die Erhöhungen 24 der Kathodenplatte 42 verlaufen hingegen in die Zeichenebene hinein. In den sichtbaren Kanälen 26 strömt beim Betrieb der Brennstoffzelle 10 ein Kathodengas entlang der Kathodenplatte 42 und der Membran-Elektroden-Einheit 14. Die im Bereich H ersichtlichen Abflachungen 38 der Erhöhungen 24 sind ebenfalls in der Schnittdarstellung A-A sichtbar. Insbesondere vor dem Verpressen der Brennstoffzelle 10 kann eine Absenkung 44 zwischen der Abflachung 38 und der Membran-Elektroden-Einheit 14, im Speziellen zwischen der Abflachung 38 und der Randverstärkung 15 der Membran-Elektroden-Einheit 14 beispielsweise 0,05 mm betragen. Somit ist ein Freigang zur Membran-Elektroden-Einheit 14 gegeben.

In der Schnittdarstellung B-B verlaufen die im Teilbereich H sichtbaren Erhöhungen 24 der Anodenplatte 40 in die Zeichenebene hinein. Die Erhöhungen 24 der Kathodenplatte 42 verlaufen hingegen quer zur Zeichenebene. In den sichtbaren Kanälen 26 strömt beim Betrieb der Brennstoffzelle ein Anodengas entlang der Anodenplatte 40 und der Membran-Elektroden-Einheit 14. Die im Bereich H ersichtlichen Abflachungen 38 der Erhöhungen 24 sind ebenfalls in der Schnittdarstellung B-B sichtbar.

Die Schnittdarstellung C-C gemäß Figur 5 ist entlang der Ebene der Bipolarplatte 12 zur Schnittlinie der Schnittdarstellung B-B parallel versetzt und verläuft nun nicht mehr durch die Abflachungen 38, weshalb diese auch nicht sichtbar sind. Wie auch in den vorhergehenden Schnittdarstellungen sind zur Verbesserung der Übersichtlichkeit von den Bipolarplatten 12 und der Membran-Elektroden-Einheit 14 nur die die Konturen innerhalb der Schnittebene gezeigt. Die Membran-Elektroden-Einheit 14 liegt also mit ihrer Randverstärkung 15 sowohl an den Erhöhungen 24 der Anodenplatte 40, als auch an den Erhöhungen 24 der Kathodenplatte 42 an. In den Kanälen 26 der Anodenplatte 40 strömt beim Betrieb der Brennstoffzelle 10 jeweils wieder Anodengas, während in dem einzigen sichtbaren Kanal der Kathodenplatte 42 Kathodengas strömt.

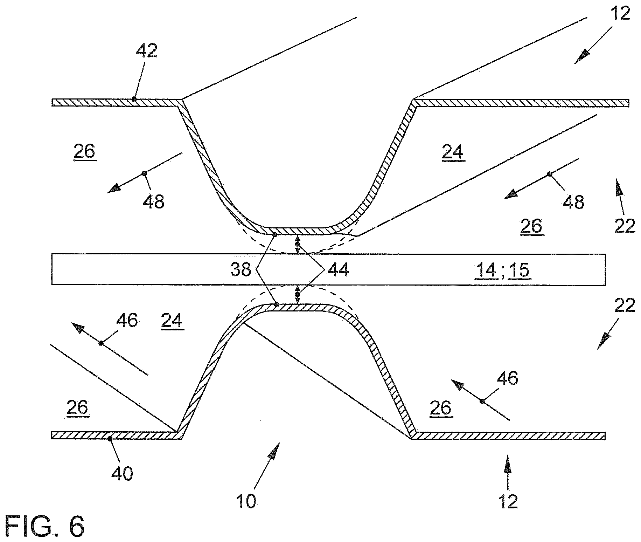

Figur 6 zeigt eine dreidimensionale Schnittdarstellung von zwei Abflachungen 38 in einem Kreuzungspunkt 32, wobei von den beiden an die Membran-Elektroden-Einheit 14 anliegenden Bipolarplatten 12 jeweils nur eine der Platten 40, 42 dargestellt ist. Diesmal weisen die Erhöhungen 24 auf beiden Hauptseiten 22 der Bipolarplatten 12 Abflachungen 38 auf. Fiktive Konturen der Erhöhungen 24 ohne Abflachungen 38 sind durch gestrichelte Linien dargestellt. Zudem sind innerhalb der Kanäle 26 Strömungsrichtungen 46 des Anodengases und Strömungsrichtungen 48 des Kathodengases exemplarisch dargestellt.

Die Abflachungen können wie auch die Erhöhungen 24 und Kanäle 26 mittels eines Prägeverfahrens hergestellt werden, wobei im Bereich der Kreuzungspunkte die Abflachungen 38 geprägt werden.

Kommt es beim Betrieb der Brennstoffzelle 10 z. B. aufgrund der Verpressung der Bipolarplatten 12 und der Membran-Elektroden-Einheiten 14 oder aufgrund unterschiedlich dicker Gasdiffusionslagen zu einem Unterschreiten eines nominellen Zellabstandes, würde dies nur zu einer minimalen Ausdehnung der Randverstärkungen 15 der Membran-Elektroden-Einheiten 14 führen. Ein Kurzschluss zwischen den Bipolarplatten 12 kann somit verhindert werden.

### Bezugszeichenliste

- 10: Brennstoffzelle
- 11: Brennstoffzellenstapel
- 12: Bipolarplatte
- 14: Membran-Elektroden-Einheit
- 15: Randverstärkung
- 16: Dichtung
- 18: Endplatte
- 20: Zugelement
- 21: Schmalseite
- 22: Hauptseite
- 24: längliche Erhöhung
- 26: Kanal
- 28: Betriebsmittelöffnung
- 30: Austrittsöffnung
- 32: Kreuzungspunkt
- 34: aktiver Bereich
- 36: Verteilbereich
- 38: Abflachung
- 40: Anodenplatte
- 42: Kathodenplatte
- 44: Absenkung
- 46: Strömungsrichtung des Anodengases
- 48: Strömungsrichtung des Kathodengases

## Patentansprüche

1. Bipolarplatte (12) für eine Brennstoffzelle (10), wobei die Bipolarplatte (12) zwei Hauptseiten (22) aufweist und auf beiden Hauptseiten (22) jeweils längliche Erhöhungen (24) und dazwischen verlaufende Kanäle (26) ausbildet, wobei wenigstens eine der Erhöhungen (24) wenigstens eine Abflachung (38) aufweist, **dadurch gekennzeichnet, dass** die wenigstens eine Abflachung (38) eine lokale Absenkung (44) der Erhöhung (24) ist und die wenigstens eine Abflachung (38) in einem Verteilbereich (36) der Bipolarplatte (12) vorgesehen ist, wobei die Kanäle (26) des Verteilbereichs (36) zu einem aktiven Bereich (34) der Bipolarplatte (12) hin oder von diesem weg führen.

2. Bipolarplatte (12) nach Anspruch 1, wobei auf die Ebene der Bipolarplatte (12) normal-projizierte Verläufe der Erhöhungen (24) beider Hauptseiten (22) wenigstens einen Kreuzungspunkt (32) aufweisen, und die wenigstens eine Abflachung (38) an dem wenigstens einen Kreuzungspunkt (32) angeordnet ist.

3. Bipolarplatte (12) nach Anspruch 2, wobei die Erhöhungen (24) beider Hauptseiten (22) an dem wenigstens einen Kreuzungspunkt (32) je eine Abflachung (38) aufweisen.

4. Bipolarplatte (12) nach einem der vorhergehenden Ansprüche, wobei die Absenkung (44) der wenigstens einen Abflachung (38) höchstens 0,2 mm, bevorzugt höchstens 0,1 mm, insbesondere höchstens 0,07 mm beträgt.

5. Bipolarplatte (12) nach einem der vorhergehenden Ansprüche, wobei die wenigstens eine Abflachung (38) eine Breite aufweist, welche größer als eine Breite der Erhöhung (24) auf einem Höhenniveau der Abflachung (38) ist.

6. Brennstoffzelle (10) umfassend wenigstens eine Bipolarplatte (12) nach einem der vorhergehenden Ansprüche.

7. Brennstoffzelle (10) nach Anspruch 6, wobei die Brennstoffzelle (10) wenigstens eine Membran-Elektroden-Einheit (14) umfasst, welche zwischen zwei der Bipolarplatten (12) angeordnet ist, wobei die Abflachung (38) eine Form aufweist, welche einer Kontur der am Kreuzungspunkt (38) über die gegenüberliegende Erhöhung (24) gespannten Membran-Elektroden-Einheit (14) entspricht.

## Claims

1. Bipolar plate (12) for a fuel cell (10), wherein the bipolar plate (12) has two main sides (22), and elongate elevations (24) and channels (26) extending therebetween are formed on each of the two main sides (22), wherein at least one of the elevations (24) has at least one flattened portion (38), **characterized in that** the at least one flattened portion (38) is a local depression (44) of the elevation (24), and the at least one flattened portion (38) is provided in a distribution region (36) of the bipolar plate (12), wherein the channels (26) of the distribution region (36) lead towards or away from an active region (34) of the bipolar plate (12).

2. Bipolar plate (12) according to Claim 1, wherein profiles of the elevations (24) of both main sides (22) projected normal onto the plane of the bipolar plate (12) have at least one intersection point (32), and the at least one flattened portion (38) is arranged at the at least one intersection point (32).

3. Bipolar plate (12) according to Claim 2, wherein the elevations (24) of both main sides (22) have a respective flattened portion (38) at the at least one intersection point (32).

4. Bipolar plate (12) according to one of the preceding claims, wherein the depression (44) of the at least one flattened portion (38) is at most 0.2 mm, preferably at most 0.1 mm, in particular at most 0.07 mm.

5. Bipolar plate (12) according to one of the preceding claims, wherein the at least one flattened portion (38) has a width which is greater than a width of the elevation (24) at a height level of the flattened portion (38).

6. Fuel cell (10) comprising at least one bipolar plate (12) according to one of the preceding claims.

7. Fuel cell (10) according to Claim 6, wherein the fuel cell (10) comprises at least one membrane electrode unit (14) which is arranged between two of the bipolar plates (12), wherein the flattened portion (38) has a shape which corresponds to a contour of the membrane electrode unit (14) stretched over the opposite elevation (24) at the intersection point (38).

## Revendications

1. Plaque bipolaire (12) pour cellule (10) à combustible, la plaque bipolaire (12) présentant deux faces principales (22) formant sur chacune des faces principales (22) des reliefs allongés (24) entre lesquels s'étendent des canaux (26), au moins l'un des reliefs (24) présentant au moins un aplatissement (38), **caractérisée en ce que**
le ou les aplatissements (38) sont un abaissement local (44) du relief (24) et le ou les aplatissements (38) sont prévus dans une zone de répartition (36) de la plaque bipolaire (12), les canaux (26) de la partie de répartition (36) conduisant vers une partie active (34) de la plaque bipolaire (12) ou s'en éloignant.

2. Plaque bipolaire (12) selon la revendication 1, dans laquelle les évolutions en projection normale des reliefs (24) des deux faces principales (22) forment au moins un point de croisement (32) sur le plan de la plaque bipolaire (12), le ou les aplatissements (38) étant disposés en le ou les points de croisement (32).

3. Plaque bipolaire (12) selon la revendication 2, dans laquelle les reliefs (24) des deux faces principales (22) présentent un aplatissement (38) sur le ou les points de croisement (32).

4. Plaque bipolaire (12) selon l'une des revendications précédentes, dans laquelle l'abaissement (44) du ou des aplatissements (38) représente au plus 0,2 mm, de préférence au plus 0,1 mm et en particulier au plus 0,07 mm.

5. Plaque bipolaire (12) selon l'une des revendications précédentes, dans laquelle le ou les aplatissements (38) présentent une largeur supérieure à la largeur du relief (24) au niveau de la hauteur de l'aplatissement (38).

6. Cellule (10) à combustible comprenant au moins une plaque bipolaire (12) selon l'une des revendications précédentes.

7. Cellule (10) à combustible selon la revendication 6, dans laquelle la cellule (10) à combustible comporte au moins une unité (14) à membrane et électrodes disposée entre deux des plaques bipolaires (12), l'aplatissement (38) présentant une forme qui correspond au contour de l'unité (14) à membrane et électrodes tendue sur le point de croisement (38) au-dessus du relief (24) opposé.
